Europäisches Patentamt

European Patent Office

Office européen des brevets

(19)

(11) Veröffentlichungsnummer: **0 060 327**
**B1**

(12) **EUROPÄISCHE PATENTSCHRIFT**

(45) Veröffentlichungstag der Patentschrift:
**02.05.85**

(51) Int. Cl.⁴: **B 60 Q 9/00**

(21) Anmeldenummer: **81108864.0**

(22) Anmeldetag: **24.10.81**

(54) Einrichtung zur Erzeugung einer optischen oder akustischen Schaltanweisung.

(30) Priorität: **09.03.81 DE 3108920**

(73) Patentinhaber: **VDO Adolf Schindling AG,
Gräfstrasse 103, D-6000 Frankfurt/Main (DE)**

(43) Veröffentlichungstag der Anmeldung:
**22.09.82 Patentblatt 82/38**

(72) Erfinder: **Stier, Bernhard, Schwarzwaldstrasse 17,
D-6233 Kelkheim-Fischbach (DE)**

(45) Bekanntmachung des Hinweises auf die Patenterteilung:
**02.05.85 Patentblatt 85/18**

(74) Vertreter: **Könekamp, Herbert, Dipl.-Ing., Sodener
Strasse 9, D-6231 Schwalbach (DE)**

(84) Benannte Vertragsstaaten:
**DE FR GB IT SE**

(56) Entgegenhaltungen:
**DE - A - 2 926 070
FR - A - 2 437 317
FR - A - 2 465 209**

**Beschreibung**

Die Erfindung bezieht sich auf eine Einrichtung zur Erzeugung einer optischen oder akustischen Schaltanweisung bei einem Kraftfahrzeug, bei der ein Drehzahlsignal einen ersten Schwellwertschalter zum Einschalten eines Hochschaltsignalgebers und einem zweiten Schwellwertschalter zum Einschalten eines Herunterschaltsignalgebers zugeführt ist. Eine solche Einrichtung ist Gegenstand der DE-A-29 26 070.

Bei der vorbekannten Einrichtung liegen im Ansteuerkreis eines Signalgebers in Reihe ein drehzahlabhängiger und ein motorlastabhängiger Schalter. Der motorlastabhängige Schalter für das Hochschaltsignal ist bei hoher Motorleistung geöffnet, bei geringer Motorleistung jedoch geschlossen. Das hat zur Folge, dass oberhalb einer vom Schwellwertschalter registrierten Drehzahl das Signal «Hochschalten» erscheint, sofern nicht der motorlastabhängige Schalter geöffnet ist, weil die Motorleistung gerade hoch ist und ein Hochschalten unangebracht wäre, weil das Fahrzeug beispielsweise gerade einen Berg hinauf fährt.

Die vorbekannte Einrichtung zur Erzeugung von Schaltanweisungen berücksichtigt die für die Wahl des Schaltzeitpunktes geltenden physikalischen Gegebenheiten eines Kraftfahrzeuges und stellt eine logische Signalverknüpfung dar. Nachteilig bei ihr ist allerdings, dass zwei in Abhängigkeit von der Motorlast arbeitende Schalter vorgesehen sein müssen. Während die Motordrehzahl problemlos zu messen ist, bereitet die Erzeugung von Signalen, welche die jeweilige Motorleistung repräsentieren, beträchtliche Schwierigkeiten. Bei einem Vergasermotor kann man zwar häufig aus dem Ansaugdruck des Vergasers mit gewisser Genauigkeit auf die Motorleistung schliessen, jedoch ist eine Leistungsbestimmung bei einem Dieselmotor mit vertretbarem Aufwand ausgeschlossen.

Es ist des weiteren eine Einrichtung zur Erzeugung einer Schaltanweisung bekannt (FR-A-2437 317), bei der ein geschwindigkeitsabhängiger Schalter und ein motorlastabhängiger Schalter vorhanden sind. Neben diesen Schaltern ist des weiteren ein Schwellwertschalter für eine maximal zugelassene Motordrehzahl zur Ausschaltung der Anzeige bei Überschreiten der maximal zulässigen Motordrehzahl vorgesehen. Dieser Einrichtung haften grundsätzlich die gleichen Nachteile an, wie der eingangs beschriebenen Einrichtung.

Der Erfindung liegt deshalb die Aufgabe zugrunde, eine Einrichtung der eingangs genannten Art zu entwickeln, welche auch ohne Messung der Motorleistung mit hinreichender Genauigkeit Schaltanweisungen gibt, durch die es möglich ist, ein mit der erfindungsgemässen Einrichtung versehenes Fahrzeug verbrauchsgünstig und möglichst verschleissarm zu fahren.

Diese Aufgabe wird erfindungsgemäss durch die im Anspruch 1 angegebenen Massnahmen gelöst.

Die Vorteile der Erfindung liegen in erster Linie im einfachen Aufbau der Einrichtung. Obgleich auf motorlastabhängige Schalter verzichtet wurde, gibt die erfindungsgemässe Einrichtung Schaltanweisungen, welche die physikalischen Erfordernisse eines Verbrennungsmotors weitgehend berücksichtigen. Dadurch, dass die Stellung des Gaspedals bei der Erzeugung von Schaltanweisungen mit berücksichtigt wird, vermag die Einrichtung beispielsweise bei Überschreiten einer bestimmten Drehzahl zu unterscheiden, ob beispielsweise die volle Motorleistung erforderlich ist und deshalb nicht hochgeschaltet werden darf oder ob beispielsweise beim Befahren einer sanften Gefällstrecke hochzuschalten ist. Auch der Schubbetrieb wird bei der erfindungsgemässen Einrichtung richtig verarbeitet. Dieser zeichnet sich durch eine ansteigende Drehzahl bei nicht betätigtem Gaspedal aus. Übersteigt diese Drehzahl den Wert des ersten Schwellwertschalters, so erscheint bei nichtbetätigtem Gaspedal das Hochschaltsignal. Wird hingegen mit viel Gas scharf beschleunigt, dann erscheint das Hochschaltsignal zutreffenderweise nicht schon beim Überschreiten der Drehzahlschwelle des ersten Schwellwertschalters, sondern erst, wenn der dritte Schwellwertschalter durchgeschaltet und damit die maximal zulässige Drehzahl erreicht ist.

Der Vorteil der erfindungsgemässen Einrichtung, dass bei ihr keine motorlastabhängigen Schalter vorgesehen sein müssen, kommt natürlich bei Kraftfahrzeugen mit Dieselmotor besonders zum Zuge, weil bei solchen Fahrzeugen die Bestimmung der Motorleistung sehr schwierig ist.

Vorteilhaft ist es, wenn gemäss einer Ausgestaltung der Erfindung das UND-Gatter bei 20% durchgetretenem Gaspedal sperrt. Dieser Betriebspunkt hat sich bei Dieselmotoren als optimale Einstellung der erfindungsgemässen Einrichtung herausgestellt.

Um zu verhindern, dass ein Hochschaltsignal erzeugt wird, wenn das Fahrzeug im höchsten Gang fährt, und ein Herunterschaltsignal auftreten kann, wenn ohnehin schon im ersten Gang gefahren wird, ist gemäss einer vorteilhaften Ausführungsform vor dem Hochschaltsignalgeber ein Schalter vorgesehen, der beim Einlegen des höchsten Ganges öffnet, und vor dem Herunterschaltsignalgeber ein anderer Schalter vorhanden, der beim Einlegen des ersten Ganges öffnet.

Eine andere Möglichkeit, ein Herunterschaltsignal bei eingelegtem ersten Gang zu unterbinden, besteht darin, dass der zweite Schwellwertschalter zum Einschalten des Herunterschaltsignalgebers nur beim Unterschreiten der Drehzahlschwelle durchschaltet.

Des weiteren kann es vorteilhaft sein, am Gaspedal einen in Leerlaufstellung ansprechenden Endschalter vorzusehen, der mit zwei Unterbrechern verknüpft ist, von denen der eine dem Hochschaltsignalgeber und der andere dem Herunterschaltsignalgeber vorgeschaltet ist und die beide in Leerlaufstellung des Gaspedals öffnen. Dadurch erscheint sowohl im Schubbetrieb des Fahrzeugs kein Hochschaltsignal als auch bei Stillstand des Fahrzeugs und eingelegtem Gang kein Herunterschaltsignal.

Wenn gemäss einer anderen vorteilhaften Ausgestaltung der Neuerung der dritte Schwellwertschalter auf eine solche Drehzahl eingestellt ist, die geringfügig über der maximal zulässigen Fahrgeschwindigkeit im grössten Gang liegt, dann kann im höchsten Gang kein Hochschaltsignal erfolgen, solange der Benutzer eines mit der erfindungsgemässen Einrichtung ausgestatteten Fahrzeugs die zulässige Höchstgeschwindigkeit nicht überschreitet. Überschreitet er diese Geschwindigkeit soweit, dass der dritte Schwellwertschalter anspricht, dann erscheint die nicht ausführbare Anweisung «Hochschalten». Der Fahrer wird durch dieses Signal darauf hingewiesen, dass er die Höchstgeschwindigkeit überschritten hat.

Gemäss einer anderen vorteilhaften Ausgestaltung der Erfindung sind die Schwellwerte des ersten und zweiten Schwellwertschalters in Abhängigkeit von der Fahrzeugbeladung verstellbar. Dadurch kann erreicht werden, dass die einzelnen Gänge des Fahrzeugs mehr ausgefahren werden können, bevor eine Schaltanweisung erscheint, wodurch die physikalischen Gegebenheiten zutreffend berücksichtigt werden.

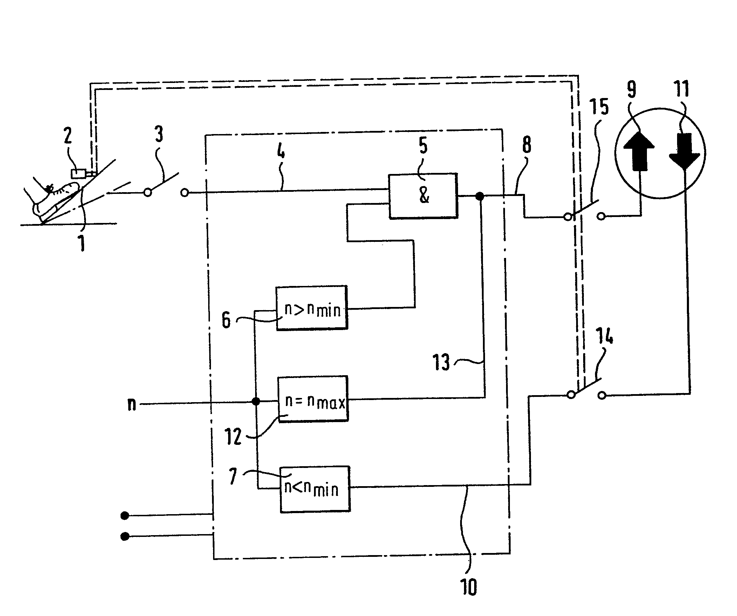

Die Erfindung lässt verschiedene Ausführungsmöglichkeiten zu. Eine davon ist schematisch in der Zeichnung dargestellt und wird nachfolgend beschrieben. Diese zeigt ein Schaltbild der erfindungsgemässen Einrichtung.

In der Zeichnung ist ein Gaspedal 1 eines Kraftfahrzeugs dargestellt. Dieses Gaspedal befindet sich in Leerlaufstellung und berührt einen Endschalter 2. Weiterhin ist innerhalb des Gaspedals 1 ein Gaspedalstellungsschalter 3 dargestellt. Dieser soll geschlossen sein, solange das Gaspedal nicht mehr als 20% durchgetreten ist.

Vom Gaspedalstellungsschalter 3 führt eine Leitung 4 zu einem UND-Gatter 5. Dieses UND-Gatter 5 ist eingangsseitig des weiteren mit einem ersten Schwellwertschalter 6 verknüpft. Dem ersten Schwellwertschalter 6 und einem zweiten Schwellwertschalter 7 ist eingangsseitig ein von der Drehzahl des Motors des Kraftfahrzeugs abhängiges Signal zugeführt.

Vom UND-Gatter 5 führt eine Leitung 8 zu einem Hochschaltsignalgeber 9. Es kann sich hierbei um einen nach oben weisenden Pfeil handeln, der aufleuchtet, wenn die Anweisung «Hochschalten» gegeben werden soll. Vom zweiten Schwellwertschalter 7 führt eine Leitung 10 zu einem Herunterschaltsignalgeber 11, bei dem es sich beispielsweise um einen abwärts gerichteten Pfeil handeln kann.

Eingangsparallel zu den beiden Schwellwertschaltern 6 und 7 ist ein dritter Schwellwertschalter 12 geschaltet, welcher über eine Leitung 13 mit dem Ausgang des UND-Gatters 5 Verbindung hat. In den Leitungen 8 und 10 ist jeweils ein Unterbrecherschalter 14 bzw. 15 angeordnet. Diese Unterbrecherschalter 14 und 15 gelangen in Offenstellung, wenn das Gaspedal sich in Leerlaufstellung befindet und der Endschalter 2 dadurch aktiviert ist. Dadurch wird im Schubbetrieb ein Hochschaltsignal und bei eingelegtem ersten Gang ein Herunterschaltsignal unterdrückt, wenn die Motordrehzahl unter 1100 U/min. sinkt.

Zur Erläuterung der Funktionsweise der erfindungsgemässen Einrichtung sei angenommen, dass der erste Schwellwertschalter 6 beispielsweise bei 1200 U/min. und der zweite Schwellwertschalter 7 bei 1100 U/min. anspricht. Der dritte Schwellwertschalter soll bei der maximal zulässigen Motordrehzahl beispielsweise bei 1800 U/min. ansprechen. Wird das Fahrzeug durch Niedertreten des Gaspedals um weniger als 20% sanft beschleunigt, dann ist der Gaspedalstellungsschalter 3 geschlossen. Sobald die Drehzahl über 1200 U/min. angestiegen ist, schaltet das UND-Gatter durch, so dass anschliessend der Hochschaltsignalgeber 9 aufleuchtet und damit die Anweisung zum Hochschalten gegeben ist. Wird hochgeschaltet, so sinkt die Drehzahl zunächst wieder unter 1200 U/min., so dass das Signal erlischt und erst wieder erscheint, wenn die Drehzahl durch weitere Beschleunigung den Schwellwert von 1200 U/min. wieder überschreitet.

Wird durch vollständiges Niedertreten des Gaspedals sehr kräftig beschleunigt, dann öffnet der Gaspedalstellungsschalter 3, so dass bei Überschreiten der Schwelle des ersten Schwellwertschalters 6 das UND-Gatter nicht durchschalten kann. Das Hochschaltsignal erscheint deshalb erst, wenn die Drehzahl so hoch ist, dass der dritte Schwellwertschalter 12 bei der maximal zulässigen Drehzahl durchschaltet.

Sinkt beispielsweise bei Befahren einer Steigung die Drehzahl unter 1100 U/min., dann spricht der zweite Schwellwertschalter 7 an, was dazu führt, dass der Herunterschaltsignalgeber 11 aktiviert wird.

Nicht dargestellt sind in der Zeichnung verschiedene schaltungstechnische Massnahmen, durch die Schaltanweisungen vermieden werden, die nicht ausführbar sind, weil beispielsweise schon der grösste oder kleinste Gang eingelegt wurde.

**Patentansprüche**

1. Einrichtung zur Erzeugung einer optischen oder akustischen Schaltanweisung bei einem Kraftfahrzeug, bei der ein Drehzahlsignal einem ersten Schwellwertschalter (6) zum Einschalten eines Hochschaltsignalgebers (9) und einem zweiten Schwellwertschalter (7) zum Einschalten eines Herunterschaltsignalgebers (11) zugeführt ist, dadurch gekennzeichnet, dass hinter dem ersten Schwellwertschalter (6) ein UND-Gatter (5) angeordnet ist, welches eingangsseitig des weiteren mit einem Gaspedalstellungsschalter (3) verknüpft ist, so dass es nur bei teilweise durchgetretenem Gaspedal (7) zum Hochschaltsignalgeber (9) durchschaltet und dass zusätzlich ein dritter Schwellwertschalter (12) vorhanden ist, der mit seinem Ausgang mit dem Ausgang des UND-Gatters (5) und mit dem Hochschaltsignalgeber (9) verknüpft ist und bei Erreichen der maximal zulässigen Drehzahl durchschaltet.

2. Einrichtung nach Anspruch 1 dadurch gekennzeichnet, dass das UND-Gatter (5) bei 20% durchgetretenem Gaspedal (1) sperrt.

3. Einrichtung nach Anspruch 1 oder einem der folgenden dadurch gekennzeichnet, dass vor dem Hochschaltsignalgeber (9) ein Schalter vorgesehen ist, welcher bei Einlegen des höchsten Ganges öffnet und dass vor dem Herunterschaltsignalgeber (11) ein anderer Schalter geschaltet ist, welcher beim Einlegen des ersten Ganges öffnet.

4. Einrichtung nach Anspruch 1 oder einem der folgenden dadurch gekennzeichnet, dass der zweite Schwellwertschalter (7) zum Einschalten des Herunterschaltsignalgebers (11) nur beim Unterschreiten der Drehzahlschwelle durchschaltet.

5. Einrichtung nach Anspruch 1 oder einem der folgenden dadurch gekennzeichnet, dass am Gaspedal (1) ein in Leerlaufstellung ansprechender Endschalter (2) vorgesehen ist, welcher mit zwei Unterbrecherschaltern (14, 15) verknüpft ist, die dem Hochschalt- bzw. Herunterschaltsignalgeber (9, 11) vorgeschaltet sind und in Leerlaufstellung des Gaspedals (1) öffnen.

6. Einrichtung nach Anspruch 1 oder einem der folgenden dadurch gekennzeichnet, dass der dritte Schwellwertschalter (12) auf eine solche Drehzahl eingestellt ist, die geringfügig über der maximal zulässigen Fahrgeschwindigkeit im grössten Gang liegt.

7. Einrichtung nach Anspruch 1 oder einem der folgenden dadurch gekennzeichnet, dass der erste und der zweite Schwellwertschalter (6, 7) in Abhängigkeit von der Fahrzeugbeladung verstellbar sind.

**Revendications**

1. Dispositif pour engendrer une indication optique ou acoustique conseillant le changement de vitesse dans un véhicule automobile, dispositif dans lequel un signal représentatif de la vitesse angulaire est appliqué à un premier commutateur(6) à valeur de seuil pour enclencher un émetteur (9) de signaux conseillant de passer à une vitesse supérieure, ainsi qu'à un deuxième commutateur (7) à valeur de seuil pour enclencher un émetteur (11) de signaux conseillant de rétrograder dispositif caractérisé par le fait qu'une porte ET (5) est disposée derrière le premier commutateur (6) à valeur de seuil et est en outre raccordée, côté entrée, à un commutateur (3) sensible à la position de la pédale d'accélération, de telle sorte qu'elle n'assure la commutation, vers l'émetteur (9) de signaux conseillant de passer à une vitesse supérieure, que lorsque la pédale d'accélération (7) est partiellement enfoncée; et par le fait qu'il est prévu en plus un troisième commutateur (12) à valeur de seuil dont la sortie est raccordée à la sortie de la porte ET (5) ainsi qu'à l'émetteur (9) de signaux conseillant de passer à une vitesse supérieure, et qui commute lorsqu'est atteinte la vitesse angulaire maximale admissible.

2. Dispositif selon la revendication 1, caractérisé par le fait que la porte ET (5) se verrouille lorsque la pédale d'accélération (1) est enfoncée à plus de 20%.

3. Dispositif selon la revendication 1 ou l'une des suivantes, caractérisé par le fait qu'il est prévu, avant l'émetteur (9) de signaux conseillant de passer à une vitesse supérieure, un commutateur qui s'ouvre lorsqu'on enclenche le rapport le plus élevé; et par le fait qu'un autre commutateur, situé avant l'émetteur (11) de signaux de rétrogradage, s'ouvre lorsqu'on enclenche le premier rapport.

4. Dispositif selon la revendication 1 ou l'une des suivantes, caractérisé par le fait que le deuxième commutateur (7) à valeur de seuil pour enclencher l'émetteur (11) de signaux conseillant de rétrograder ne commute que lorsque le seuil de vitesse angulaire est dépassé négativement.

5. Dispositif selon la revendication 1 ou l'une des suivantes , caractérisé par le fait qu'il est prévu, sur la pédale d'accélération (1), un interrupteur (2) de fin de course qui réagit à la position de ralenti et est raccordé à deux rupteurs (14, 15) qui sont branchés en amont des émetteurs respectifs (9, 11) de signaux conseillant de passer à une vitesse supérieure ou de signaux conseillant de rétrograder, et qui s'ouvrent lorsque la pédale d'accélération (1) occupe sa position de ralenti.

6. Dispositif selon la revendication 1 ou l'une des suivantes, caractérisé par le fait que le troisième commutateur (12) à valeur de seuil est ajusté à une vitesse angulaire qui est légèrement supérieure à la vitesse maximale admissible de déplacement au rapport le plus élevé.

7. Dispositif selon la revendication 1 ou l'une des suivantes, caractérisé par le fait que les premier et deuxième commutateurs (6, 7) à valeur de seuil sont ajustables en fonction du chargement du véhicule.

**Claims**

1. Apparatus for producing a visual or acoustic gear change instruction in a motor vehicle, wherein a rotational speed signal is fed to a first threshold value switch (6) for switching-on a change-up indicator (9) and to a second threshold value switch (7) for switching-on a change-down indicator (11), characterised in that after the first threshold value switch (6) there is arranged an AND gate (5) which at its input side is also connected to an accelerator pedal position switch (3), so that it switches-through to the change-up indicator (9) only when the accelerator pedal (7) is partly depressed, and that a third threshold value switch (12) is additionally provided which its output is connected to the output of the AND gate (5) and which is connected to the change-up indicator (9) and which switches through when the maximum premissible rotational speed is reached.

2. Apparatus according to claim 1, characterised in that the AND gate (5) blocks when the accelerator pedal (1) is 20% depressed,

3. Apparatus according to claim 1 or one of the following claims, characterised in that before the change-up indicator (9) a switch is provided which opens when the top gear is engaged, and that before the change-down indicator (11) another switch is arranged which opens when the first gear is engaged.

4. Apparatus according to claim 1 or one of the following claims, characterised in that the second threshold value switch (7) for the switching-on of the change-down indicator (11) switches-through only when the rotational speed threshold is gone below.

5. Apparatus according to claim 1 or one of the following claims, characterised in that at the accelerator pedal (1) there is provided a limit switch (2) which responds in the idling position and which is connected to two breaker switches (14, 15) which precede the change-up and change-down indicators respectively (9, 11) and open in the idling position of the accelerator pedal (1).

6. Apparatus according to claim 1 or one of the following claims, characterised in that the third threshold value switch (12) is set to a rotational speed which is slightly above the maximum permissible travelling speed in top gear.

7. Apparatus according to claim 1 or one of the following claims, characterised in that the first and second threshold value switches (6, 7) are adjustable in dependence on the vehicle loading.

1/1